# EUROPEAN PATENT SPECIFICATION

(11) **EP 0 846 604 B1**
(45) Date of publication and mention of the grant of the patent: **27.02.2002**
(21) Application number: 97309095.4
(22) Date of filing: 12.11.1997
(51) Int. Cl.: B60S 1/38

(54) **Improvements relating to windscreen wiper harnesses**
Verbesserungen eines Scheibenwischergestelles
Améliorations de la monture d'un essuie-glace.

(30) Priority: 04.12.1996 GB 9625152
(43) Date of publication of application: 10.06.1998
(73) Proprietor: TRICO PRODUCTS CORPORATION, Buffalo, NY 14203-1298 (US)
(72) Inventor: Clarke, Andrew, Aberdare, Mid Glamorgan, CF44 8BS (GB); Rees, David Alwyn, Treharris, Mid Glamorgan, CF46 5NR (GB); Palfrey, John William, Blackwood, Gwent, NP2 0HB (GB); Daniels, Roger, Cwmbran, Gwent, NP4 5TW (GB)
(74) Representative: James, Michael John Gwynne

(56) References cited:
- EP-A- 0 646 507
- DE-A- 3 339 414
- GB-A- 2 066 655

## Description

A standard type of windscreen wiper harness comprises a main yoke to which are pivotally connected subsidiary yokes which in turn support the wiper blade. The normal arrangement is to provide that a T-shaped head (in cross-section) of the wiper blade is held by claws or tabs formed at the free ends of the yoke members. It is important that the claws at the end formations of the yoke members are precisely formed so that the wiper blade is held securely without too much free play, but can nevertheless slide longitudinally with respect to the wiper blade harness to allow for adjustment as the wiper blade flexes during movement across a windscreen. If bends at the yoke ends are formed one above the other to create the claws, then the formation of the second bends is impeded by the presence of the first bends and thus reduce the accuracy with which the wiper blade will be supported. Alternatively offsetting of the bend lines to facilitate the forming process can result in weakening of the claw formation and/or lead to other problems.

EP-A-0 646 507 provides a yoke for a windscreen wiper harness incorporating claw members at the yoke ends for receiving and supporting the head of a wiper blade of generally T-shaped cross-section. Each claw member has two side walls, each of which extends between outer and inner ends down from a first bend line junction with the yoke body and terminates in a tab directed towards the other side wall from a second bend line. By this means each tab can respectively support one side of the head of the T of the wiper blade, with the outward end of the first bend line essentially extending no further than the inward end of the second bend line.

In accordance with the present invention such a structure has the terminal edges of the side walls extending essentially at right angles to the two bend lines and defined largely at the outward end of the second bend line and at a position intermediate of the length of the first bend line.

With such an arrangement the positioning of the two bend lines is such that both bend lines can be formed accurately and independently, thus achieving the desired precision. Nevertheless the side walls extend for a substantial width in the region where the tabs are created at the yoke ends. This provides a robust support for the tabs and also ensures that the sides of the head of the wiper blade are well supported. Additionally, where the wiper blade is strengthened by metal support ribs (as is usual) the terminal edges of the side walls provide good location points (extending essentially vertically) for location barbs projecting from the sides of the support ribs. There will be little tendency for these barbs to ride vertically and thus distort the location of the wiper blade.

It is preferred that each bend line should be formed by a pressing or punching tool acting along the whole length of that bend line.

The invention further extends to an assembly of the yoke of this invention as hereinbefore defined in combination with a blade rubber having a T-shaped head held within the claw members. Ideally this assembly will incorporate support ribs set into each side of the head of the blade rubber. These support ribs can carry barbs to locate against the terminal edges of the side walls of the claw members, so as to stabilise the whole assembly.

The invention may be performed in various ways and a preferred embodiment will now be described, by way of example, with reference to the accompanying drawings, in which:-
Figure 1 is a side view of an end of a yoke member incorporating a claw member of this invention;
Figures 2 and 3 are underneath and end views respectively of the claw member shown in Figure 1; and
Figure 4 is an enlarged view of the claw member shown in Figure 1.

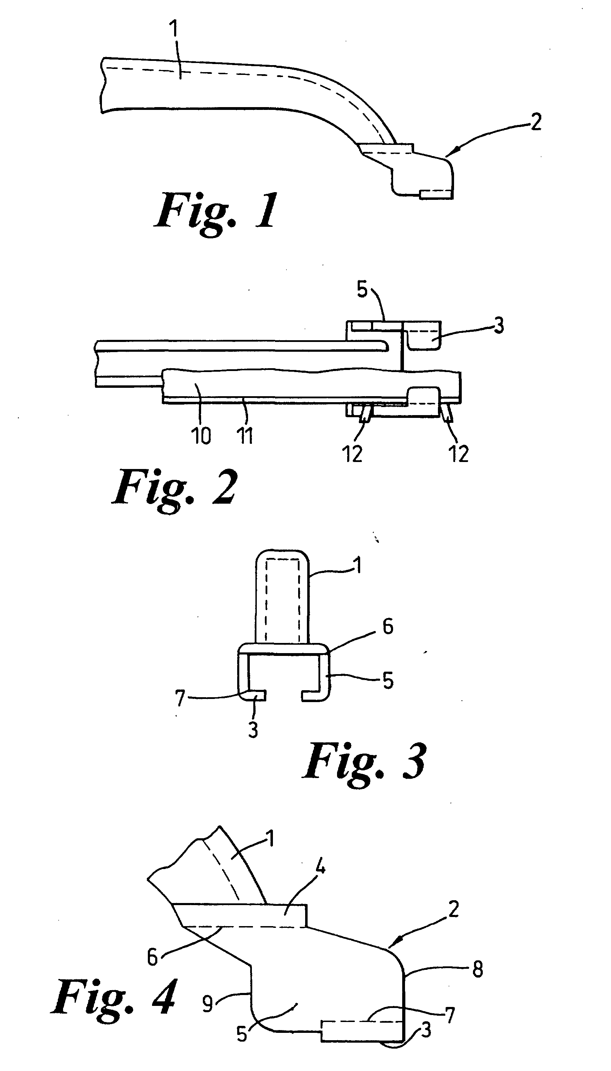

The end of a yoke member 1 carries a claw member 2 intended to support the head of a wiper blade of T-shaped cross section. The claw member incorporates a pair of tabs 3 which will support either side of the head of the wiper blade whilst allowing the wiper blade head to slide laterally within the claw member 2. A head plate 4 of the claw member 2 has side walls 5 formed by pressing along first bend lines 6. The tabs 3 return inwardly along second bend lines 7. As can be seen clearly from Figure 4, because the bend lines 6 and 7 are offset, and even avoid overlap, pressing or punching tools can be applied to the parts of the sheet of material extending from the head plate 4 separately at the two bend lines 6 and 7. Hence because both bend lines 6 and 7 are formed offset a very accurate construction of the claw member 2 can be achieved.

The side walls 5 of the claw member 2 extend between a vertical edge 8 in line with the outer end of the bend line 7 and a vertical edge 9 at a position towards the inner end of the bend line 6. This creates a side wall 5 of substantial length which therefore gives good lateral support to the head of the wiper blade. The upper ends of the vertical edges 8 and 9 are then angled up to a respective end of the first bend line 6. Figure 2 also illustrates parts of a rubber wiper blade 10 in position. Metal support ribs 11 are set into each side of the head of the wiper blade 10. Barbs 12 are formed at the position where the wiper blade will be passing through the claw member 2. These barbs can be pressed into position to locate at either end of the side walls 5. The barbs 12 therefore locate against the vertical edges 8 and 9. Because the head portion of the wiper blade is a fairly precise fit within the claw member 2 there will be little potential for vertical movement of the wiper blade within the claw member 2 and thus the barbs 12 will not be able to ride to a position beyond the limits of the vertical faces 8 and 9 at the ends of the side walls 5.

## Claims

1. A yoke for a windscreen wiper harness (1) and incorporating claw members (2) at the yoke ends for receiving and supporting the head of a wiper blade (10) of generally T-shaped cross-section, each claw member having two side walls (5), each of which extends between an outer end (8) and an inner end (9) down from a first bend line junction (6) with the yoke body (4) and terminates in a tab (3) directed towards the other side wall from a second bend line (7), such that each tab can respectively support one side of the head of the T of the wiper blade, with the outward end of the first bend line essentially extending no further than the inward end of the second bend line, **characterised in that** the terminal edges (8,9) of the side walls extend essentially at right angles to the two bend lines and are defined largely at the outward end of the second bend line (7) and at a position intermediate of the length of the first bend line (6).

2. A yoke according to Claim 1, further **characterised in that** each bend line (6,7) has been formed by a pressing or punching tool acting along the whole length of that bend line.

3. A yoke according to Claim 1 or Claim 2, further **characterised in that** a portion of each terminal edge of the side wall is angled up to a respective end of the first bend line (6).

4. An assembly of a yoke according to any one of Claims 1 to 3 in combination with a blade rubber (10) having a T-shaped head held within the claw members (2).

5. An assembly according to Claim 4, further **characterised in that** support ribs (11) are set into each side of the head of the blade rubber.

6. An assembly according to Claim 5, further **characterised in that** barbs (12) are formed on the support ribs (11) to locate against the terminal edges (8,9) of the side walls of the claw members.

## Patentansprüche

1. Bügel für einen Scheibenwischerarm (1), wobei an Bügelenden Klauenelemente (2) zur Aufnahme und zum Tragen des Kopfes eines Wischerblattes (10) mit im wesentlichen T-förmigen Querschnitt abgeordnet sind, wobei jedes Klauenelement zwei Seitenwandungen (5) aufweist, welche sich jeweils von einem äußeren Ende (8) und einem inneren Ende (9) von einer ersten Kröpfungslinie (6) mit dem Bügelkörper (4) abwärts erstrecken und in einer Zunge (3) Enden, welche in Richtung der anderen Seitenwandung einer zweiten Kröpfungslinie (7) ausgerichtet sind, so daß die Zunge jeweils eine Seite des Kopfes des T-Abschnitts des Wischerblattes stützt, wobei sich das äußere Ende der ersten Kröpfungslinie im wesentlichen nicht weiter als das innere Ende der zweiten Kröpfungslinie erstreckt,
**dadurch gekennzeichnet,**
**daß** die Endkanten (8, 9) der Seitenwandungen zu den beiden Kröpfungslinien im rechten Winkel stehen und überwiegen am äußeren Ende der zweiten Kröpfungslinie (7) an einer Stelle innerhalb der Länge der ersten Kröpfungslinie (6) gebildet sind.

2. Bügel nach Anspruch 1, **dadurch gekennzeichnet, daß** jede Kröpfungslinie (6, 7) mittels eines Press- oder Stanzwerkzeuges hergestellt ist, welches entlang der gesamten Länge der Kröpfungslinie angreift.

3. Bügel nach Anspruch 1 oder 2, **dadurch gekennzeichnet, daß** ein Abschnitt der Endkanten der Seitenwandung in Richtung eines jeweiligen Endes der ersten Kröpfungslinie (6) abgewinkelt ist.

4. Anordnung eines Bügels gemäß wenigstens einem der Ansprüche 1 bis 3 in Kombination mit einem Wischergummi (10) mit einem T-förmigen Kopf, welcher innerhalb des Klauenelementes (2) gehalten ist.

5. Anordnung nach Anspruch 4, **dadurch gekennzeichnet, daß** auf jeder Seite des Kopfes des Wischergummis Trägerrippen (11) ausgebildet sind.

6. Anordnung nach Anspruch 5, **dadurch gekennzeichnet, daß** zum Fixieren bzgl. der Endkanten (8, 9) der Seitenwandungen des Klauenelementes auf den Trägerrippen (11) Widerhaken (12) ausgebildet sind.

## Revendications

1. Etrier pour un harnais d'essuie-glace (1) et incorporant des éléments de griffe (2) aux extrémités de l'étrier pour recevoir et supporter la tête d'une lame d'essuie-glace (10) de section transversale ayant la forme générale d'un T, chaque élément de griffe ayant deux parois latérales (5), dont chacune s'étend entre une extrémité externe (8) et une extrémité interne (9) en descendant à partir d'une première jonction de ligne de pliure (6) avec le corps (4) de l'étrier et se termine en une patte (3) dirigée vers l'autre paroi latérale à partir d'une seconde ligne de pliure (7), de telle sorte que chaque patte puisse respectivement supporter un côté de la tête du T de la lame d'essuie-glace, avec l'extrémité externe de la première ligne de pliure ne s'étendant sensiblement pas plus loin que l'extrémité interne de la seconde ligne de pliure, **caractérisé par le fait que** les bordures terminales (8, 9) des parois latérales s'étendent sensiblement à angle droit par rapport aux deux lignes de pliure et sont définies pour une grande part à l'extrémité externe de la seconde ligne de pliure (7) et à une position intermédiaire de la longueur de la première ligne de pliure (6).

2. Etrier selon la revendication 1, **caractérisé en outre par le fait que** chaque ligne de pliure (6, 7) a été formée par un outil de presse ou de poinçonnage agissant le long de la totalité de la longueur de cette ligne de pliure.

3. Etrier selon la revendication 1 ou la revendication 2, **caractérisé en outre par le fait qu'**une partie de chaque bordure terminale de la paroi latérale est inclinée jusqu'à une extrémité respective de la première ligne de pliure (6).

4. Ensemble formé d'un étrier tel que défini à l'une quelconque des revendications 1 à 3 en combinaison avec un caoutchouc de lame (10) ayant une tête en forme de T maintenue à l'intérieur des éléments de griffe (2).

5. Ensemble selon la revendication 4, **caractérisé en outre par le fait que** des nervures de support (11) sont situées dans chaque côté de la tête du caoutchouc de lame.

6. Ensemble selon la revendication 5, **caractérisé en outre par le fait que** des crans (12) sont formés sur les nervures de support(11) pour se situer contre les bordures terminales (8, 9) des parois latérales des éléments de griffe.
